# FASCICULE DE BREVET EUROPEEN

(11) **EP 2 061 692 B1**
(45) Date de publication et mention de la délivrance du brevet: **13.11.2013**
(21) Numéro de dépôt: 07765956.3
(22) Date de dépôt: 25.05.2007
(51) Int. Cl.: B62H 5/00, B62K 25/02

(54) **DISPOSITIF ANTIVOL DE PIECES DE VELO**
DIEBSTAHLSICHERUNG FÜR FAHRRADTEILE
ANTI-THEFT DEVICE FOR BICYCLE PARTS

(30) Priorité: 29.05.2006 FR 0604729
(43) Date de publication de la demande: 27.05.2009
(73) Titulaire: Tribout, Michel, 67000 Strasbourg (FR); Lacom, Frédéric Jean, 67460 Souffelweyersheim (FR)
(72) Inventeur: Tribout, Michel, 67000 Strasbourg (FR); Lacom, Frédéric Jean, 67460 Souffelweyersheim (FR)
(74) Mandataire: Munier, Laurent
(86) Numéro de dépôt international: PCT/FR2007/000880
(87) Numéro de publication internationale: WO 2007/138181

(56) Documents cités:
- EP-A- 0 853 034
- DE-U1- 29 610 148
- FR-A- 2 879 992
- US-A- 5 813 258

## Description

La présente invention concerne un dispositif antivol de pièces de vélos. Elle est particulièrement adaptée aux serrages des roues par vissage sur l'axe des roues ou sur le collier ou pince du tube de selle des vélos.

Plus particulièrement, le présent dispositif antivol de pièces de vélos, roues et/ou tige de selle, les roues sont maintenues sur la fourche avant ou sur le hauban arrière par un dispositif de vissage solidaire d'une rondelle de support disposé sur le moyeu de roue, tandis que la tige de selle est maintenue dans son logement par un dispositif de vissage traversant solidaire de la pince ou collier de selle.

Le vol des roues du vélo et de la tige de selle (tube portant la selle) est fréquent et pose un réel problème aux cyclistes. En plus du désagrément occasionné par le vol d'éléments importants du vélo, le cycliste est obligé de remplacer les pièces dérobées. Le vol de ces éléments du vélo est particulièrement fréquent.

Pour éviter ceci, la mise en place d'un dispositif interdisant le dévissage de l'écrou et/ou du boulon est prévu.

Les dispositifs existants pour tenter de régler ce problème sont pourvus d'une clef de forme classique, clef qu'il est aisé de se procurer, ou d'une clef codée dotée d'une empreinte spécifique nécessitant le port permanent de la clef adaptée, clef qui ne doit pas être perdue ou égarée.

Pour éviter le vol de la bicyclette, il est fortement conseillé d'attacher celle-ci à un point fixe à l'aide d'un moyen antivol de type connu (câbles,...) généralement des arceaux ou épingles qui sont mis à disposition des cyclistes comme point fixe. Dans ce cas, il est impossible de coucher ou de retourner le vélo.

Le document EP0853034, qui est considéré comme représentant l'état de la technique le plus pertinent, décrit un dispositif antivol de pièces de vélo, en particulier les roues positionnées sur la fourche avant ou sur le hauban arrière par un système d'écrou ou de boulon, ou la tige de selle dont l'axe de serrage comprend un écrou et un boulon, qui est constitué par au moins:
- une rondelle support et/ou une pince ou collier de selle,
- une ou plusieurs goupilles mobiles à l'intérieur d'une ou plusieurs canalisations de guidage opérées dans l'écrou,
   ledit moyen antivol mettant en oeuvre une ou plusieurs goupilles mobiles guidées, lesdits éléments mobiles pouvant se déplacer dans deux positions différentes sous l'action de leur propre poids et de la rotation dudit moyen antivol
- une première position de travail, lorsque le vélo est dans une position verticale sur ses deux roues, le dispositif antivol interdit le serrage et desserrage dévissage,
- une deuxième position de travail, lorsque le vélo est dans une position retournée en appui sur la selle et le guidon, position dans laquelle le dispositif antivol permet à l'écrou une rotation libre dans les deux sens autour de leur axe,
   ledit dispositif antivol étant pourvu par ailleurs d'un moyen d'étanchéité protégeant le ou les éléments mobiles de tous facteurs tels que de l'eau, de la poussière pouvant gêner leur libre mobilité dans leur canalisation.

Le problème posé à la présente invention consiste à interdire le vol des roues et/ou de la tige de selle.

Ceci est obtenu par le dispositif qui est constitué par au moins :
- Une rondelle support ou une pince ou collier de selle coopérant avec un écrou ou une tête de boulon de vissage ;
- Ladite rondelle support est formatée de telle manière que suite à sa mise en place sur son support, sa rotation autour de son axe est impossible sans engendrer la rotation de ce même support ;
- Une ou plusieurs canalisations de guidage recevant chacune au moins une goupille, ces canalisations étant percées borgne dans la partie supérieure de la rondelle support ou de la pince (la partie supérieure et inférieure de la rondelle support est déterminée suivant un plan confondu avec l'axe de la rondelle support, et pour la pince suivant l'axe du percement destiné à recevoir le boulon de vissage) ;
- Un écrou ou un boulon dont la partie coopérant avec la rondelle support ou la pince , dans le cas du boulon plus précisément la tête du boulon, présente une pluralité de crans à crémaillère sur leur périphérie suivant l'axe dudit écrou ou boulon ;
- Dans sa première position de travail, vélo en position d'utilisation posé sur ses deux roues, (verrouillage de l'écrou ou du boulon) le dispositif étant serré, le moyen réversible constitué par au moins une goupille bloque et interdit par son positionnement partiel au sein du crantage à crémaillère le desserrage dévissage de l'écrou ou du boulon, dans cette même position du vélo, le vissage serrage de l'écrou ou du boulon reste possible si le serrage n'est pas déjà effectué ;
- Dans sa deuxième position de travail, vélo retourné, posé sur son guidon et sa selle, ledit moyen de blocage constitué par au moins une goupille sous l'effet de la gravité, se déplace dans sa canalisation de guidage, libérant ainsi le crantage à crémaillère permettant par suite le desserrage dévissage de l'écrou ou du boulon ainsi que le vissage serrage.

Suivant d'autres caractéristiques du dispositif selon l'invention :
- Le dispositif antivol appliqué au boulon comprend pour les roues une rondelle d'appui engagée sur le boulon côté opposé à la tête de boulon, crantée sur une face et munie d'une excroissance sur sa périphérie, excroissance se logeant entre les nez des doigts de la fourche ;
- Le dispositif antivol appliqué au boulon pour la selle comprend sur la pince une surface à cliquet opérée sur l'extrémité opposée à celle recevant la tête de boulon ;
- Le dispositif antivol appliqué au boulon comprend pour les roues et la selle un écrou cranté sur une face ;
- L'écrou cranté en cliquet appuie sur le crantage cliquet de la rondelle d'appui dans le cas des roues et sur la surface à cliquet de la pince dans le cas de la selle ;
- L'utilisation de l'outil nécessaire au vissage serrage peut être remplacé par une ou plusieurs excroissances positionnées sur la tête de l'écrou ou la tête du boulon, de type papillon ou levier.

L'invention sera mieux comprise, grâce à la description ci-après, qui se rapporte à des modes de réalisation préférés, donnés à titre d'exemples non limitatifs, et expliqués avec référence aux dessins annexés, dans lesquelles :
- La figure 1 représente une vue en élévation d'un vélo en position verticale roues au sol attaché à un point fixe et présentant trois écrous et/ou boulons verrouillés par le dispositif selon l'invention.
- La figure 2 représente une vue en élévation du vélo de la figure 1 en position renversé reposant sur sa selle et son guidon, présentant les trois écrous et/ou boulons en position déverrouillée.
- La figure 3 représente une vue en élévation du dispositif selon l'invention sur le moyeu de la fourche d'une roue avant de vélo.
- La figure 4 représente une vue du dispositif écrou rassemblé avec écrou borgne.
- La figure 5 représente une vue du dispositif écrou éclaté avec écrou borgne.
- La figure 6 représente une vue de face en transparence de la rondelle support (10) du dispositif écrou.
- La figure 7 représente une vue de coté ainsi que deux coupes A-A et B-B de l'écrou borgne (9) du dispositif écrou.
- La figure 8 représente une vue du dispositif boulon rassemblé.
- La figure 9 représente une vue du dispositif boulon éclaté.
- La figure 10 représente une vue de coté ainsi qu'une coupe C-C du boulon (21) du dispositif boulon.
- La figure 11 représente une vue de coté ainsi que deux coupes D-D et E-E de la rondelle support (20) du dispositif boulon.
- La figure 12 représente une vue rassemblée de la pince ou collier de selle.
- La figure 13 représente une vue éclatée de la pince ou collier de selle.
- La figure 14 représente une vue du dessus en transparence ainsi qu'une coupe F-F de la pince ou collier de selle (33).
- La figure 15 représente une vue de coté ainsi qu'une coupe G-G du boulon de serrage (38) de la pince ou collier de selle.
- La figure 16 représente une vue du dispositif écrou rassemblé avec écrou passant.
- La figure 17 représente une vue du dispositif écrou éclaté avec écrou passant.
- La figure 18 représente une vue du dispositif boulon rassemblé avec une excroissance.
- La figure 19 représente une vue du dispositif écrou rassemblé avec deux excroissances.

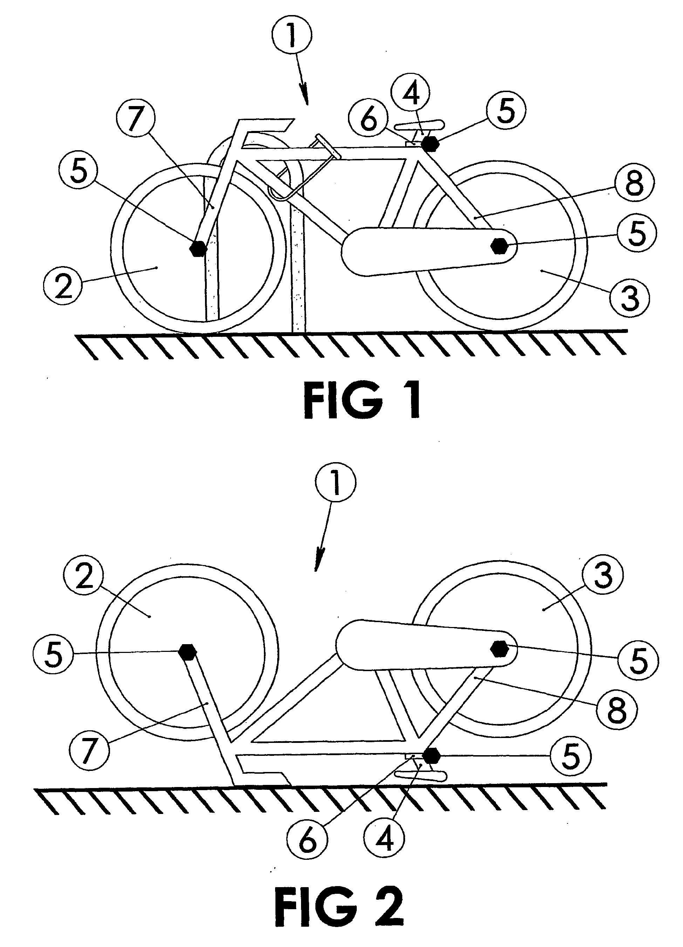

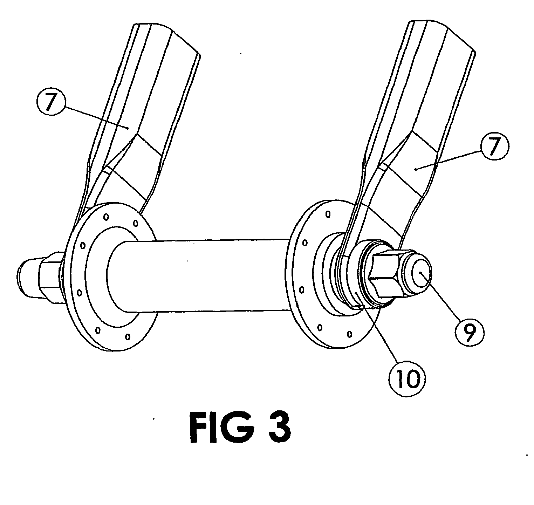

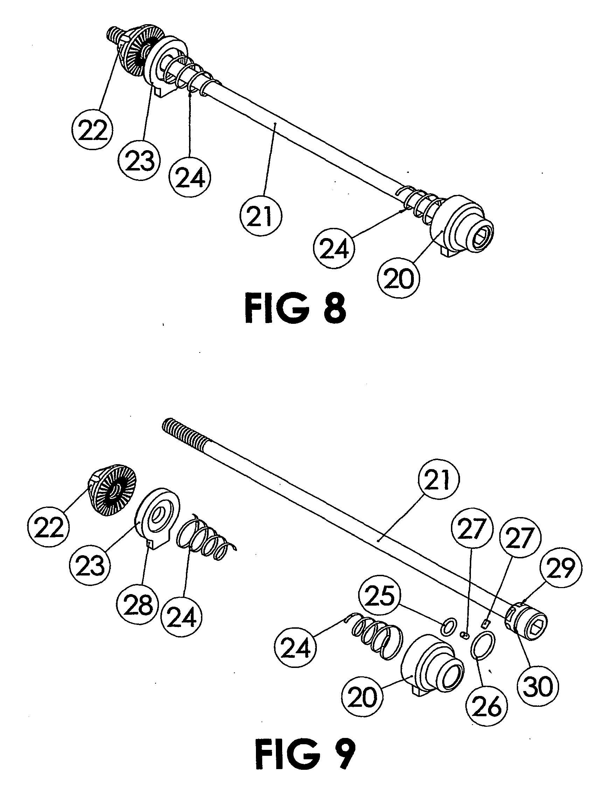

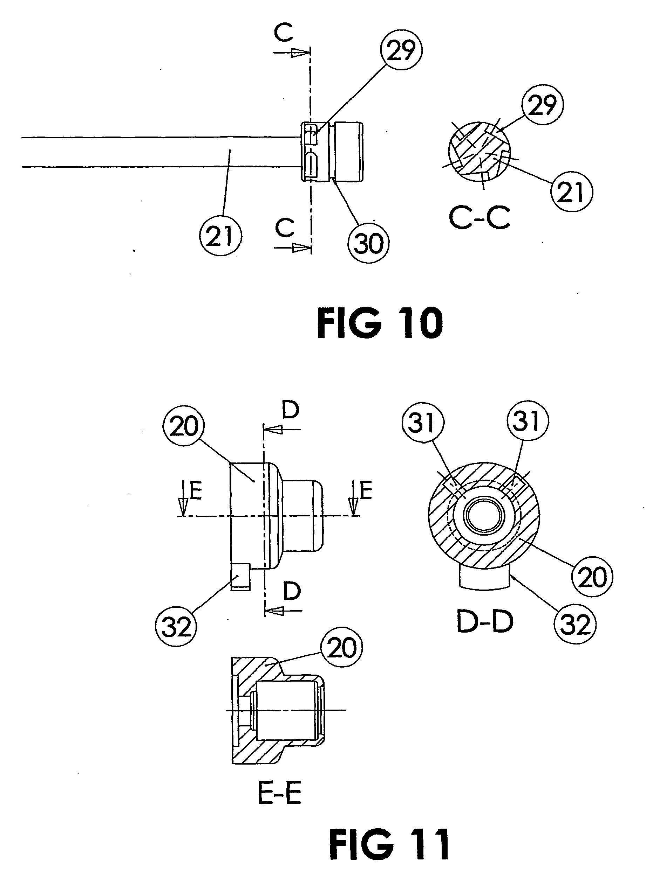

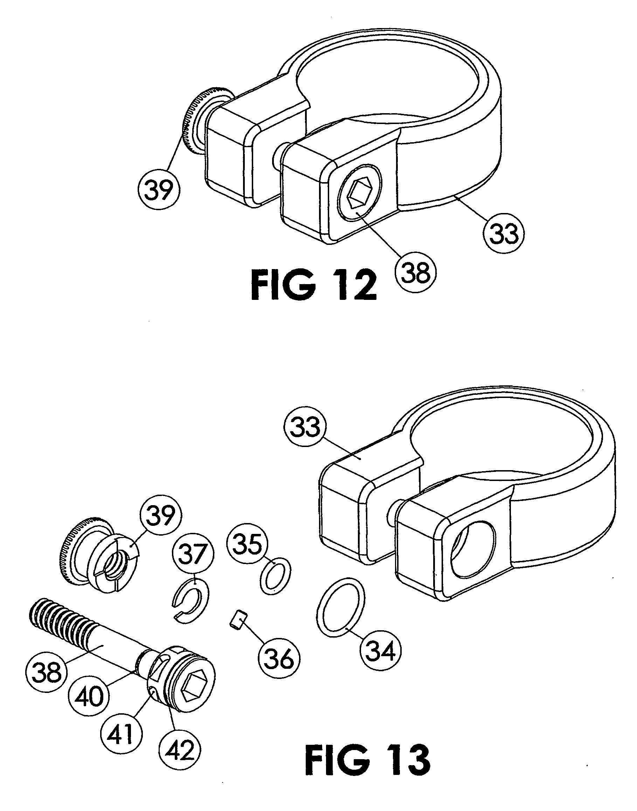

Le dispositif antivol de pièces de vélo (1), roues (2,3) et/ou tige de selle (4) représenté sur les figures (fig. 1, 2) est situé dans la rondelle support (10,20) (fig. 3, 5, 6, 8, 9, 11, 16, 18, 19) pour les roues et dans la pince ou collier de selle (33) (fig. 12, 13, 14) pour la tige de selle (4) ainsi que dans la tête du boulon (21,38) (fig. 8, 9, 10, 12, 13, 15, 18) ou la partie mâle de section ronde de l'écrou (9,44) (fig. 3, 4, 5, 7, 16, 17, 19), il a pour but de permettre ou d'interdire le dévissage du boulon (21,38) ou de l'écrou (9,44).

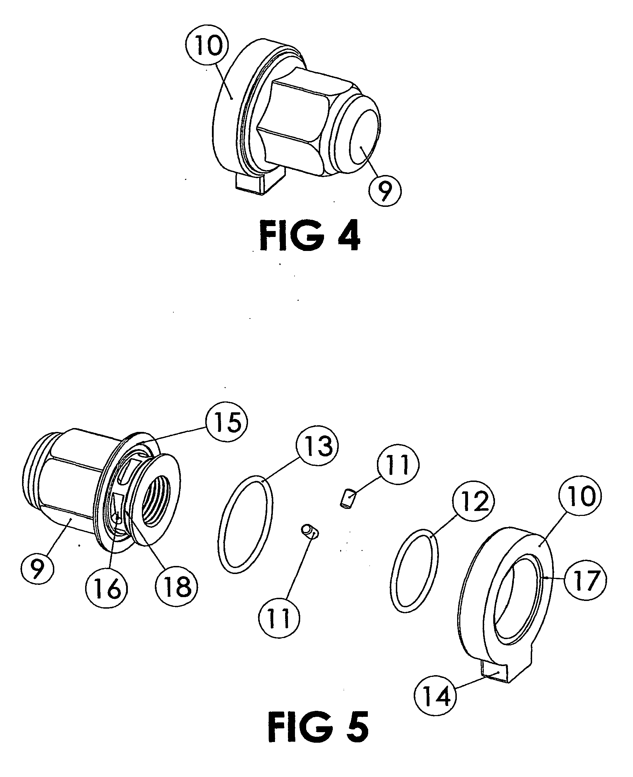

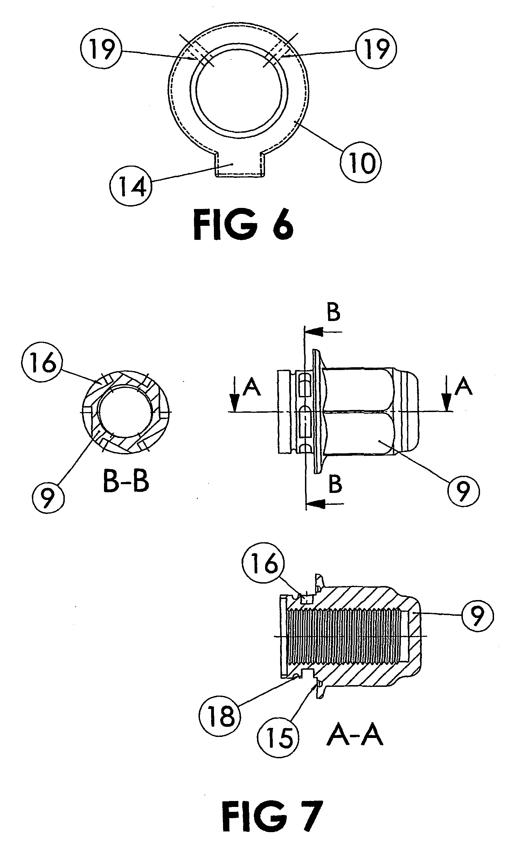

Il se compose d'une ou de plusieurs canalisations de guidage (19,31,43) (fig. 6, 11, 14) percées borgne dans la rondelle support (10,20) et dans la pince (33) de manière rayonnante en partant de l'axe de percement destiné à recevoir la tête du boulon (21,38) ou l'écrou (9,44), ces canalisations de guidage (19,31,43) sont destinées à accueillir chacune au moins une ou plusieurs goupilles (11,27,36) (fig. 5, 9, 13), ces canalisations de guidage (19,31,43) sont de diamètre et de profondeur sensiblement supérieur au diamètre et longueur des goupilles (11,27,36) qu'elles contiennent.

La rondelle support (10,20) est munie sur sa périphérie d'une excroissance (14,32) (fig. 5, 6, 11, 16) venant prendre appui sur au moins un des nez des doigts de la fourche pour en interdire la rotation suivant son axe sans que cela n'engendre la rotation de son propre support, ces nez sont obligatoirement positionnés sur les doigts de la fourche pour des raisons de sécurité afin d'interdire à l'axe de la roue de sortir de son logement dans les doigts de la fourche même en cas de desserrage partiel.

Une ou plusieurs goupilles (11,27,36) mobiles et libres, circulent dans la ou les canalisations de guidage (19,31,43) autorisant le vissage serrage de l'écrou (9,44) ou du boulon (21,38) et interdisant dans une position particulière le dévissage de l'écrou (9,44) ou du boulon (21,38) et dans une autre position la libre rotation de ce même écrou (9,44) ou boulon (21,38).

Le ou les éléments mobiles constitués par la ou les goupilles (11,27,36) se déplacent dans la ou les canalisations de guidage (19,31,43) selon que le vélo (1) se trouve en position habituelles sur ses deux roues (2,3)(fig. 1) ou en position retournée sur son guidon et sa selle (fig. 2).

La ou les goupilles (11,27,36) s'engagent sous l'effet de leur poids pour partie dans le crantage à crémaillère (16,29,41) (fig. 5, 7, 9, 10, 13, 15, 17) qui est formé d'une pluralité de sillons opérés de préférence à intervalles réguliers sur la face externe de la tête du boulon (21,38) ou de la face externe de section ronde de l'écrou (9,44).

Ces sillons sont de profondeur variable qui va en s'accroissant afin d'atteindre sur l'un de leurs cotés une profondeur suffisante pour l'engagement d'une partie de la goupille (11,27,36) et sur l'autre de leurs cotés être à fleur avec la surface externe de la tête du boulon (21,38) ou la surface externe de section ronde de l'écrou (9,44).

Pour plus de clarté, voyons les deux positions essentielles de la rondelle support (10,20) ainsi que les deux positions essentielles du collier ou pince de selle (33) support du boulon (38) (fig. 12, 13, 15) :
- Vélo (1) en position habituelle sur ses deux roues (fig.1) et attaché à un point fixe par un antivol de type connu, câble, articulé,... lorsque l'écrou (9,44) et/ou le boulon (21,38) sont vissés serrés, la ou les goupilles (11,27,36) s'engagent sous l'effet de leur poids en partie dans le crantage crémaillère (16,29,41) tout en restant pour partie dans leur canalisation de guidage (19,31,43) ce qui à pour effet de rendre l'écrou (9,44) et/ou le boulon (21,38) solidaire de sa rondelle support (10,20) ou de la pince ou collier de selle (33) dans le sens du desserrage dévissage, interdisant ainsi le desserrage dévissage de l'écrou (9,44) et/ou du boulon (21,38) tout en permettant de visser, serrer d'avantage ces derniers car la rotation imprimée à l'écrou (9,44) et/ou au boulon (21,38) dans le cas du vissage serrage faisant passer la ou les goupilles (11,27,36) du côté le plus profond de chaque crantage à son côté à fleur avec la tête du boulon (21,38) ou de l'écrou (9,44) et d'un crantage au suivant.
- Lorsque le vélo (1) est en position retournée sur son guidon et sa selle (fig.2) la ou les goupilles (11,27,36) peuvent circuler librement sous l'effet de leur propre poids dans la ou les canalisations de guidage (19,31,43) jusqu'à une position de garage, en appui sur la face borgne de la ou les canalisations de guidage (19,31,43), position dans laquelle la ou les goupilles (11,27,36) libèrent entièrement le crantage à crémaillère (16,29,41) rendant possible la rotation de l'écrou (9,44) et/ou du boulon (21,38) aussi bien dans le sens de vissage serrage que dans le sens desserrage dévissage.

Un autre avantage de l'invention est que dans le cas de l'utilisation du dispositif à écrou, il n'est pas indispensable d'équiper chaque roue de deux écrous antivol pour que le dispositif soit opérant, un seul écrou antivol positionné indifféremment d'un côté ou de l'autre du moyeu interdit le démontage de la roue.

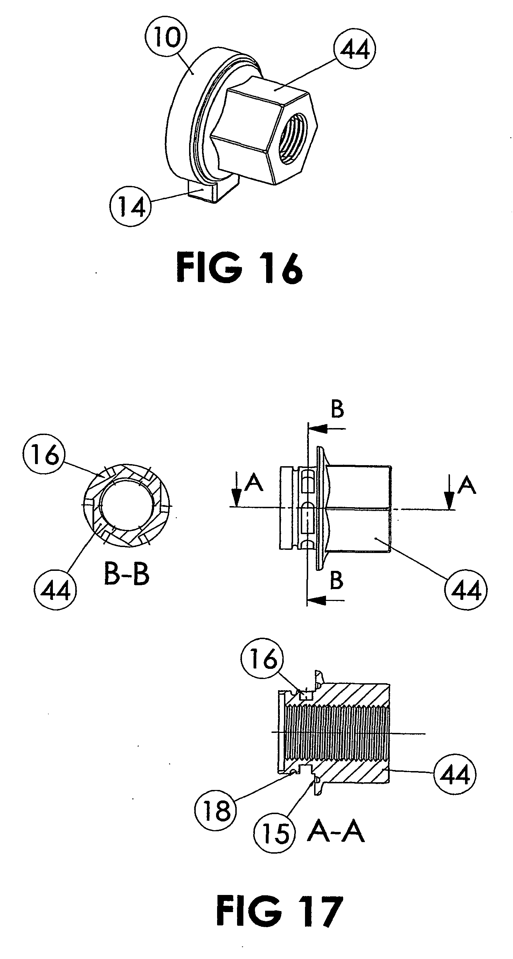

Le dispositif antivol à écrou peut être indifféremment pourvu d'un écrou borgne (9) (fig. 3, 4, 5, 7, 19) ou d'un écrou débouchant (44) (fig. 16, 17).

Pour être complètement efficace, le dispositif antivol roues à boulon doit être muni d'un écrou (22) (fig. 8, 9, 18) présentant un crantage crémaillère rayonnant sur l'une de ses faces planes, face coopérant avec la face de forme identique de la rondelle d'appui (23) (fig. 8, 9, 18), ledit écrou (22) ainsi que ladite rondelle d'appui (23) s'engagent sur le boulon (21) (fig. 8, 9, 10, 18) côté opposé à la tête de ce même boulon (21).

La rondelle d'appui (23) positionnée entre l'écrou (22) et contre les doigts de la fourche (7) ou les doigts de l'étrier (8) présente sur l'une de ses faces plane un crantage crémaillère rayonnant coopérant avec le crantage crémaillère rayonnant de l'écrou (22) et sur sa périphérie une excroissance (28) venant se positionner entre les nez des doigts de la fourche (7) ou les nez des doigts de l'étrier (8).

L'excroissance (28) (fig. 9) de la rondelle (23) permet le blocage en rotation de la dite rondelle (23).

Les crantages à crémaillère rayonnant de l'écrou (22) et de la rondelle (23) coopérants entre eux permettent d'interdire le desserrage dévissage de l'écrou (22) tout en autorisant le vissage serrage de ce même écrou (22) et ce quel que soit la position du vélo (1).

Pour la pince ou collier de selle (fig.12) un mode de réalisation préféré est celui pour lequel le dispositif est pourvu d'un écrou (39) (fig. 12, 13) présentant un crantage crémaillère rayonnant sur l'une de ses faces planes, face coopérant avec le crantage de forme identique de la pince ou collier de selle (33) opéré sur l'extrémité opposée à celle recevant la tête du boulon (38).

Le crantage crémaillère rayonnant de l'écrou (39) et de la pince ou collier de selle (33) coopérants entre eux à pour but d'interdire le desserrage dévissage de l'écrou (39) mais d'en permettre le vissage serrage.

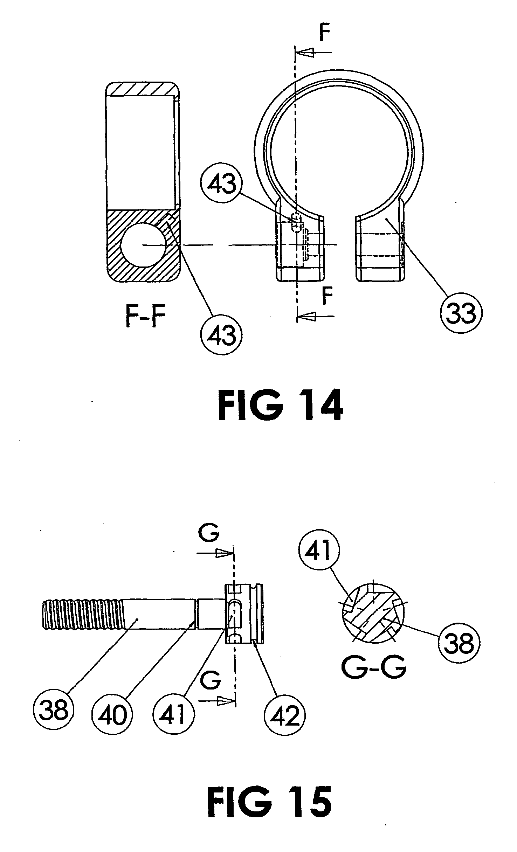

La tête du boulon (38) est maintenu dans son fourreau à l'aide d'une pièce de maintien (37) (fig. 13) prenant place dans la gorge (40) (fig. 13, 15) effectuée sur le corps du boulon (38) et rayonnant par rapport à son axe.

Après assemblage la pièce de maintien (37) se situera sur le corps du boulon (38) au niveau de l'ouverture de la pince ou collier de selle (33) plaquée contre la face de l'extrémité de la pince recevant la tête du boulon (38).

Quel que soit le type de dispositif antivol, aussi bien pour le dispositif appliqué au boulon, qu'à l'écrou, il est indispensable pour garantir la longévité du dispositif et la libre mobilité de la ou les goupilles (11,27,36) de positionner de chaque coté du crantage crémaillère un joint (12,13) (fig. 5), (25,26) (fig. 9), (34,35) (fig. 13) prenant place dans son canal support de joint (15,18,30,42) ou sur la tige du boulon à la base de sa tête, afin de leur assurer une protection contre tous facteurs extérieurs tels que eau ou poussière.

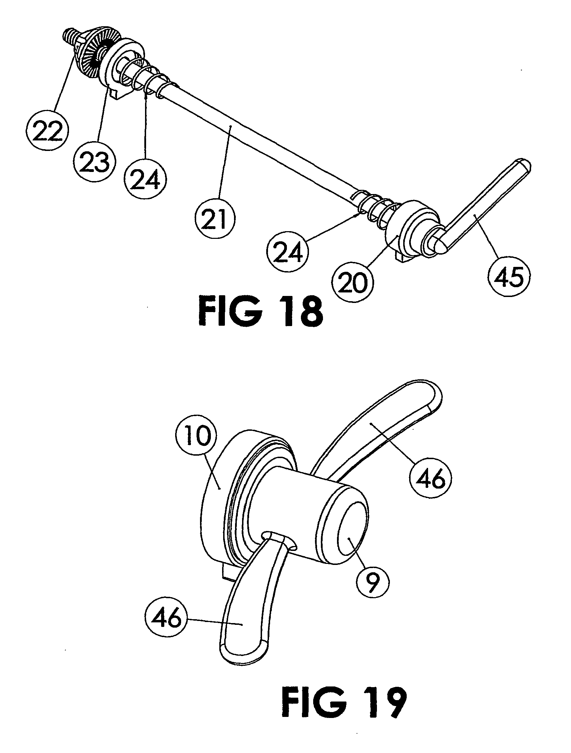

L'utilisation de l'outil nécessaire au vissage serrage peut être remplacé par une ou plusieurs excroissances (45,46) (fig. 18, 19) positionnées sur la tête de l'écrou (9,44) ou la tête du boulon (21,38), de type papillon ou levier.

### Signes de référence

- 1.: vélo
- 2.: roue avant
- 3.: roue arrière
- 4.: tige de selle
- 5.: écrou ou boulon
- 6.: pince
- 7.: fourche avant
- 8.: étrier
- 9.: écrou borgne
- 10.: rondelle support
- 11.: goupille
- 12.: joint
- 13.: joint
- 14.: excroissance
- 15.: canal support de joint
- 16.: crantage crémaillère
- 17.: enfoncement
- 18.: canal support de joint
- 19.: canalisation de guidage
- 20.: rondelle support
- 21.: boulon
- 22.: écrou cranté
- 23.: rondelle d'appui
- 24.: ressort
- 25.: joint
- 26.: joint
- 27.: goupille
- 28.: excroissance
- 29.: crantage crémaillère
- 30.: canal support de joint
- 31.: canalisation de guidage
- 32.: excroissance
- 33.: pince ou collier de selle
- 34.: joint
- 35.: joint
- 36.: goupille
- 37.: pièce de maintien
- 38.: boulon
- 39.: écrou
- 40.: gorge
- 41.: crantage crémaillère
- 42.: canal support de joint
- 43.: canalisation de guidage
- 44.: écrou débouchant
- 45.: levier
- 46.: papillon

Les signes de références insérés après les caractéristiques techniques mentionnées dans les revendications ont pour seul but de faciliter la compréhension de ces dernières et n'en limitent aucunement la portée.

Bien que l'invention ait été décrite en liaison avec des structures particulières, elle n'y est nullement limitée et on peut y apporter de nombreuses variantes.

Les combinaisons des différents modes de réalisation représentées sur les figures ou décrits ci-dessus ne sortent pas du cadre de l'invention.

Ce dispositif antivol de pièces de vélos peut être appliqué de façon non limitative à d'autres type de véhicules que le vélo et utilisé à chaque fois que l'impossibilité du dévissage s'avère nécessaire.

## Revendications

1. Dispositif antivol de pièces de vélo, en particulier :
- les roues positionnées sur la fourche avant (7) ou sur le hauban arrière (8) par un système d'écrou ou de boulon,
- la tige de selle (4) dont l'axe de serrage comprend un écrou ou un boulon,
qui est constitué par au moins :
- un écrou (9,44) ou boulon (21,38) pourvu d'un crantage à crémaillère (16,29,41),
- une rondelle support (10,20) munie sur sa périphérie d'une excroissance (14,32),
- une pince ou collier de selle (33),
- une ou plusieurs goupilles (11,27,36) mobiles à l'intérieur d'une ou plusieurs canalisations de guidage (19,31,43) opérées dans la rondelle support (10,20) ou la pince ou collier de selle (33),
ledit moyen antivol mettant en oeuvre une ou plusieurs goupilles (11,27,36) mobiles guidées, lesdits éléments mobiles pouvant se déplacer dans deux positions différentes sous l'action de leur propre poids et de la rotation dudit moyen antivol :
- une première position de travail, lorsque le vélo est dans une position verticale sur ses deux roues, le dispositif antivol permet le vissage serrage de l'écrou (9,44) ou du boulon (21,38) mais en interdit le desserrage dévissage,
- une deuxième position de travail, lorsque le vélo est dans une position retournée en appui sur la selle et le guidon, position dans laquelle le dispositif antivol permet à l'écrou (9,44) ou au boulon (21,38) une rotation libre dans les deux sens autour de leur axe,
ledit dispositif antivol étant pourvu par ailleurs d'un moyen d'étanchéité protégeant le ou les éléments mobiles de tous facteurs tels que eau, poussière pouvant gêner leur libre mobilité dans leur canalisation.

2. Dispositif selon la revendication 1 **caractérisé en ce que** la ou les canalisations de guidage (19,31,43) sont des percements borgnes opérés dans la rondelle support (10,20) ou la pince ou collier de selle (33) par rapport à l'axe du percement destiné à recevoir la tête du boulon (21,38) ou la partie de section ronde de l'écrou (9,44) et perpendiculairement par rapport à cet axe, ces canalisations de guidage (19,31,43) sont de diamètre et de profondeur sensiblement supérieur au diamètre et longueur des goupilles (11,27,36) quelles contiennent.

3. Dispositif selon la revendication 1 **caractérisé en ce que** chaque canalisation de guidage (19,31,43) reçoit au moins une goupille (11,27,36).

4. Dispositif selon la revendication 1 **caractérisé en ce que** la ou les goupilles (11,27,36) circulent librement dans leur canalisation de guidage (19,31,43) et se positionnent soit en appui sur la face borgne de leur canalisation de guidage (19,31,43) soit en partie dans le crantage crémaillère (16,29,41).

5. Dispositif selon la revendication 1 **caractérisé en ce que** une pluralité de crans crémaillère (16,29,41) sont opérés sur la tête du boulon (21,38) ou sur la face externe de la partie de section ronde de l'écrou (9,44).

6. Dispositif selon la revendication 1 et 5 **caractérisé en ce que** les crans crémaillère (16,29,41) sont de profondeur variable et que l'une de leurs extrémités est à fleur avec la surface externe de la tête du boulon (21,38) ou de la surface externe de la partie de section ronde de l'écrou (9,44) rendant le vissage serrage du boulon (21,38) ou de l'écrou (9,44) possible et ce quel que soit la position du vélo (1).

7. Dispositif selon l'une quelconque des revendications 1 et 5 et 6 **caractérisé en ce que** le crantage crémaillère (16,29,41) lorsque le vélo (1) est en position normale d'utilisation rend le desserrage dévissage du boulon (21,38) ou de l'écrou (9,44) impossible du fait du positionnement de la ou des goupilles (11,27,36) en partie dans le crantage crémaillère (16,29,41) et dans leur canalisation de guidage (19,31,43), le vissage serrage restant possible car faisant passer la ou les goupilles (11,27,36) du côté le plus profond de chaque crantage à son côté à fleur avec la tête du boulon (21,38) ou de l'écrou (9,44) et d'un crantage au suivant.

8. Dispositif selon la revendication 1 **caractérisé en ce que** la rondelle support (10,20) est munie sur sa périphérie d'une excroissance (14,32) venant prendre appui sur au moins un des nez des doigts de la fourche pour en interdire la rotation suivant son axe sans engendrer la rotation de son propre support.

9. Dispositif selon la revendication 1 **caractérisé en ce que** des joints (12,13)(25,26)(34,35) positionnés de chaque côté du crantage à crémaillère (16,29,41) protégent ce dernier ainsi que la ou les goupilles (11,27,36) et leur canalisation de guidage (19,31,43) de tout facteur tels que eau et poussière pouvant gêner le bon fonctionnement de l'ensemble.

## Patentansprüche

1. Diebstahlsicherungsvorrichtung für Fahrrädereinzelteile, insbesondere:
- die an der Vordergabel (7) oder an der hinteren Stützstange (8) angebrachte Räder an Hand eines Bolzen oder eines Verschraubungsmutter System,
- die Sattelstange (4) wo die Verschraubungsachse aus einem Bolzen oder eines Verschraubungsmutter System besteht, wobei das dieses wenigstens aus
- einer Verschraubungsmutter (9, 44) oder einem Bolzen (21, 38) der mit einem Zahngestänge (16, 29, 41) versehen ist,
- einer Unterlegscheibe (10, 20) mit einem Auswuchs (14, 32) auf dem Umrand angebracht
- eine Sattelklemmung oder Fahrrad Spannzange (33)
- ein oder mehrere Splinte (11, 27, 36) freibeweglich in einem oder mehreren Führungskanälen (19, 31, 43) die in den Unterlegescheiben (10, 20) oder Sattelklemmung (33) angebracht sind,
dass die so genannten Diebssicherheitsmittel, die einen oder mehrere Splinte (11, 27, 36) freibeweglich einsetzen welche sich in zwei verschiedenen Positionen versetzen können durch ihren eigenen Druck gefördert und der Umdrehung der so genanten Diebstahlsicherungsvorrichtung:
- eine erste Arbeitsstellung, wenn das Fahrrad senkrecht auf beiden Räder steht, in dieser Stellung, ermöglicht die Diebstahlsicherung durch das Festziehen der Verschraubung (9, 44) oder des Bolzen (21, 38) aber verhindert die Lockerung und das Abschrauben.
- eine zweite Arbeitsstellung, wenn das Fahrrad nach unten umgekippt ist und auf Sattel und Lenkstange aufliegt, Stellung in welcher die Diebstahlsicherung der Verschraubungsmutter (9, 44) oder der Bolzen (21, 38) eine freie Umdrehung in beiden Richtungen um ihre Achse ermöglicht, da die so genante Diebstahlsicherung mit einer Abdichtung versehen ist die freibeweglichen Teile gegenüber Wasser, Staub, in den Führungskanäle schützt.

2. Diebstahlsicherungsvorrichtung nach Anspruch 1, **dadurch gekennzeichnet, dass** der oder die Führungskanäle (19, 31, 41) Sackbohrungen aufweisen die in der Unterlegescheiben (10, 20) angebracht sind wo die Sattelklemmung oder Fahrrad Spannzange (33) gegenüber der Bohrungsachse zweckbestimmt zum Einbauen des Bolzenkopfes (21, 38) oder dem gerundete Teil der Mutter (9, 44) senkrecht gegenüber dieser Achse, die Führungskanäle (19, 31, 43) sind deutlich größer in Durchmesser und Tiefe als jene der Splinten (11, 27, 36) die sie beinhalten.

3. Diebstahlsicherungsvorrichtung nach Anspruch 1, **dadurch gekennzeichnet dass** der oder die Führungskanäle (19, 31, 41) wenigstens mit einem Splint (11, 31, 36) ausgerüstet sind.

4. Diebstahlsicherungsvorrichtung nach Anspruch 1, **dadurch gekennzeichnet dass** der oder die Splint(e) (11, 27, 36) frei bewegend sind in den Führungskanäle (19, 31, 43) und sich positionieren entweder gegen die Blindseite ihrer Führungskanäle (19, 31, 43) oder zum Teil in das Zahngestänge (16, 29, 41).

5. Diebstahlsicherungsvorrichtung nach Anspruch 1 **dadurch gekennzeichnet dass** eine Mehrzahl von Zahngestänge (16, 29, 41) auf dem Kopf des Bolzen (21, 38) angebracht ist oder auf der Außenseite der Abrundung des Bolzen (9, 44).

6. Diebstahlsicherungsvorrichtung nach Anspruch 1 und 5, **dadurch gekennzeichnet dass** die Zahngestänge (16, 29, 41) variabler Tiefe sind und dass eine ihrer Endseite Oberflächen berührend mit der Kopf Außenseite des Bolzen (21, 38) und der Außenfläche der Abrundung der Blindmutter (9, 44), dies ermöglicht die Verschraubung des Bolzen (21, 38) oder der Blindmutter (9, 44) und erlaubt die Lockerung und das Anschrauben unabhängig der Stellung des Farads (1).

7. Diebstahlsicherungsvorrichtung nach einem der Ansprüche 1, 5, oder 6, **dadurch gekennzeichnet dass** die Zahngestänge (16, 29, 41), wenn das Farad (1) in einer normalen Benutzungsposition steht die Lockerung und das Abschrauben des Bolzen (21, 38) oder der Blindmutter (9, 44) verhindert dadurch dass die Splinte (11, 27, 36) zum Teil in dem Zahngestänge (16, 29, 41) und in dem Führungskanal (19, 31, 43) das Verschrauben und Festanziehen möglich machen weil der oder die Splinte (11, 27, 36) an der tiefsten Seite von dem Gestänge Oberflächen berührend mit dem Bolzenkopf (21, 38) oder der Blindmutter (9, 44) und der nächsten Verzahnung.

8. Diebstahlsicherungsvorrichtung nach Anspruch 1 **dadurch gekennzeichnet dass** die Unterlegscheibe (10, 20) mit einem Auswuchs (14, 32) auf dem Umrand angebracht, die, zum wenigsten, auf einem der Gabelfinger Stütze nimmt zum Verhindern seiner eigener Umdrehung um seine Achse ohne sein eigene Rotation zu verursachen.

9. Diebstahlsicherungsvorrichtung nach Anspruch 1 **dadurch gekennzeichnet dass** Dichtungen (12, 13) (25, 26) ( 34, 35) auf beiden Seiten des Zahngestänge (16, 29, 41) diesen letzten abschirmen sowie auch der oder die Splinte (11, 27, 36) und ihre Führungskanäle (19, 31, 43) von jedem Empfindlichkeitsfaktor sprich Wasser, Staub, die störend sein könnten für das Gesamte.

## Claims

1. Anti-theft device for bicycle parts, in particular:
- the wheels positioned on the front fork (7) or on the rear stay (8) by a nut or bolt system,
- the saddle tube (4) whose clamping axis comprises a nut or a bolt, which it is at least composed of:
- a nut (9, 44) or bolt (21, 38) fitted with a ratchet notch (16, 29, 41),
- a support washer (10, 20) fitted on its peripheral surface with a raised portion (14, 32),
- a saddle collar or clamp (33),
- one or several pins (11, 27, 36) that can move inside one or several guide passages (19, 31, 43) in the support washer (10, 20) or the saddle collar or clamp (33),
wherein said anti-theft means uses one or several mobile guided pins (11, 27, 36), wherein said mobile elements may move to two different positions under the effect of their weight and the rotation of said anti-theft means:
- a first position of use, where the bicycle is in a vertical position stood on its two wheels, wherein the anti-theft device permits the tightening - screwing of the nut (9, 44) or the bolt (21, 38) but prevents loosening - unscrewing,
- a second position of use, where the bicycle is stood upside down on its handlebars and saddle, a position in which the anti-theft device permits free rotation of the nut (9, 44) or the bolt (21, 38) in both directions around its axis,
wherein said anti-theft device is further fitted with sealing means to prevent the mobile element(s) from all factors such as water or dust that could hinder their free movement inside the passage.

2. Device according to claim 1, **characterised in that** the guide passage(s) (19, 31, 43) are blind holes in the support washer (10, 20) or the saddle collar or clamp (33) with respect to the axis of the hole designed to accommodate the bolt head (21, 38) or the round section part of the nut (9, 44) and perpendicularly with respect to this axis, wherein these guide passages (19, 31, 43) have a diameter and a depth that are substantially greater than the diameter and depth of the pins (11, 27, 36) that they contain.

3. Device according to claim 1, **characterised in that** each guide passage (19, 31, 43) accommodates at least one pin (11, 27, 36).

4. Device according to claim 1, **characterised in that** the pin(s) (11, 27, 36) move freely in their guide passage (19, 31, 43) and are positioned either in contact with the blind face of their guide passage (19, 31, 43) or partially in the ratchet notch (16, 29, 41).

5. Device according to claim 1, **characterised in that** a plurality of ratchet notches (16, 29, 41) are made in the bolt head (21, 38) or on the outside face of the round section part of the nut (9, 44).

6. Device according to claim 1 and 5, **characterised in that** the ratchet notches (16, 29, 41) have a variable depth and that one of their ends is at the same level as the outside surface of the bolt head (21, 38) or the outside surface of the round section of the nut (9, 44), making it possible to tighten - screw the bolt (21, 38) or the nut (9, 44) regardless of the position of the bicycle (1).

7. Device according to any one of claims 1, 5 and 6, **characterised in that** the ratchet notches (16, 29, 41) when the bicycle (1) is in the normal position of use makes it impossible to loosen - unscrew the bolt (21, 38) or the nut (9, 44) due to the position of the pins (11, 27, 36) partially inside the ratchet notch (16, 29, 41) and in their guide passage (19, 31, 43), but tightening - screwing remains possible as this moves the pin(s) (11, 27, 36) from the deepest side of each notch to the side that is at the same level as the bolt head (21, 38) or the nut (9, 44) and from one notch to the next.

8. Device according to claim 1, **characterised in that** the support washer (10, 20) is equipped on its peripheral surface with a raised portion (14, 32) that comes into contact with at least one of the tips on the end of the fork so as to prevent it from being rotated around its axis without this causing the rotation of its support.

9. Device according to claim 1, **characterised in that** seals (12, 13) (25, 26) (34, 35) positioned on either side of the ratchet notch (16, 29, 41), which protects the latter as well as the pins (11, 27, 36) and their guide passage (19, 31, 43) against all factors such as water or dust that could hinder the satisfactory operation of the assembly.
